# EUROPEAN PATENT SPECIFICATION

(11) **EP 2 602 146 B1**
(45) Date of publication and mention of the grant of the patent: **21.08.2019**
(21) Application number: 11847888.2
(22) Date of filing: 01.04.2011
(51) Int. Cl.: F16H 61/02, B60K 23/00, F16H 63/42, F16H 61/12

(54) **GEAR SHIFT INSTRUCTION DEVICE**
ANLEITUNGSVORRICHTUNG FÜR EINE GANGSCHALTUNG
DISPOSITIF D'INSTRUCTION DE PASSAGE DE RAPPORT

(43) Date of publication of application: 12.06.2013
(73) Proprietor: TOYOTA JIDOSHA KABUSHIKI KAISHA, Toyota-shi, Aichi-ken, 471-8571 (JP)
(72) Inventor: ITO, Mitsuharu, Toyota-shi Aichi 471-8571 (JP); SHIMIZU, Kenji, Toyota-shi Aichi 471-8571 (JP)
(74) Representative: TBK
(86) International application number: PCT/JP2011/058428
(87) International publication number: WO 2012/137277

(56) References cited:
- EP-A2- 1 911 997
- JP-A- 61 016 144
- JP-A- 2005 306 242
- JP-A- 2005 306 242
- JP-A- 2008 121 701
- JP-A- 2008 121 701
- JP-A- 2008 138 827
- JP-A- 2008 138 827
- JP-A- 2010 185 536

## Description

### [Technical Field]

The present invention relates to a gear-shift instruction device that notifies a driver of a target gear of a transmission (manual transmission) in which the gear can be switched in response to a manual gear shift operation (shift change).

### [Background Art]

With a vehicle including a transmission with which gear shift operations can be performed manually, shift changes such as up-shifting and down-shifting can be performed in order to select an arbitrary gear at the driver's will.

In general, gear selection and gear shift timing differ between individual drivers, and therefore it is conceivable for a vehicle to travel without a gear optimum for the driving condition being selected.

For example, in a shift change for raising the gear (up-shift), the selection of a gear that is lower than the gear appropriate for the driving condition will lead to poor fuel consumption, and on the other hand, sufficient acceleration performance will not be obtained if a gear that is higher than the gear appropriate for the driving condition is selected.

In view of this, the applicant of this application has proposed and filed a patent application for a gear-shift instruction device for notifying the driver of a target gear that is appropriate for the driving condition (e.g., see Patent Literature 1).

With this gear-shift instruction device, a control device (ECU) stores a gear shift map (e.g., a gear shift map having substantially the same gear shift lines as the automatic transmission) set with gears (target gears) that are optimum in terms of improving fuel consumption according to driving conditions of the vehicle, such as the vehicle speed and the engine load (e.g., accelerator opening degree), a target gear is calculated by referencing the gear shift map based on the vehicle speed and accelerator opening degree, a determination is made by comparing the target gear and the transmission gear that the driver has actually set, and a gear shift instruction is output based on the determination result so as to notify the driver of the gear shift instruction.

Specifically, when the current gear is lower than the target gear, an up-shift is instructed by lighting an up-shift lamp or the like, and when the current gear is higher than the target gear, a down-shift is instructed by lighting a down-shift lamp or the like, thus notifying the driver that the transmission is to be shifted. Also, in the case where the target gear calculated using the gear shift map and the current gear are the same, the driver is notified of a gear shift instruction that the currently set gear is the optimum gear by, for example, extinguishing both the up-shift lamp and the down-shift lamp.

### [Citation List]

### [Patent Literature]

[PTL 1] JP 2008-121701A discloses a gear-shift instruction which, in the opinion of the Examining Division of the European Patent Office, falls within the pre-characterizing portion of claim 1. Further gear-shift instruction devices are known from JP 2005 306242 A and JP 2008 138827 A.

### [Summary of Invention]

### [Technical Problem]

With the conventional example in Patent Literature 1, there are cases where the driver unintentionally performs a shift change for selecting a gear different from the target gear in the process of performing a shift change.

Specifically, the shift lever of a shift device disposed in the vehicle interior is displaced in accordance with a shift gate. This shift gate is predominately of the H pattern type and includes a selection groove extending in the left-right direction (also called the vehicle width direction or selection operation direction) and multiple shift grooves extending in the front-back direction (also called the vehicle front-back direction or shift operation direction) so as to orthogonally traverse the selection grooves with predetermined gaps therebetween in the lengthwise direction of the selection groove. Examples of the shift grooves include a 1-2 shift groove, a 3-4 shift groove, a 5-6 shift groove, and a reverse shift groove.

In one case of shift changing, a selection operation is performed to displace the shift lever in one direction in the selection groove, and thereafter a shift operation is performed to displace the shift lever in one direction in one of the shift grooves. The force of the selection operation and the force of the shift operation are transmitted via an appropriate power transmission mechanism (e.g., a configuration including cables, links, and the like) to a synchronization mechanism for gear switching provided in the transmission.

Here, examples of cases of unintentional shift changing include (1) the case of an up-shift when a down-shift is to be performed, (2) the case of a down-shift when an up-shift is to be performed, and (3) the case of an overshifting down when a down-shift is to be performed.

One specific example of case (2) is the case where when moving the shift lever from the second gear position in the 1-2 shift groove of the aforementioned H-shaped shift gate to the third gear position in the adjacent 3-4 shift groove, the shift lever is accidentally moved to the first gear position. In other words, this is the case of a down-shift to the first gear when attempting to perform an up-shift to the third gear while driving in the second gear.

One specific example of (3) is the case where when moving the shift lever from the fifth gear position in the 5-6 shift groove of the aforementioned H-shaped shift gate to the fourth gear position in the adjacent 3-4 shift groove, the shift lever is accidentally moved to the second gear position in the 1-2 shift groove. In other words, this is the case of an overshifting down to the second gear when attempting to perform a down-shift to the fourth gear while driving in the fifth gear.

Among these cases, in the case of performing an unintentional shift change for up-shifting when a down-shift is to be performed as in (1), although required deceleration cannot be achieved, an excessive load is not applied to the transmission and engine.

However, when an unintentional shift change such as in (2) or (3) is performed while the vehicle speed is a predetermined speed or higher, the vehicle may rapidly decelerate due to excessive engine braking, and there is the risk of an excessive load being applied to the vehicle power train (engine, transmission, differential, and the like).

In view of this, the applicant of this application has proposed and filed a patent application for technology for providing a shift gate with a miss-shift prevention plate in order to prevent unintentional shift changes such as those described above (e.g., see JP 2010-185536A). Although unintentional shift changes can be prevented according to this patent literature, it is difficult to allow the driver to intentionally perform, as a driving technique, shift changes similar to the above-described unintentional shift changes (to the extent that an excessive load is not produced).

In this way, with conventional technology, even in the case where the above-described unintentional shift changes are performed, there is no technical idea of detecting such unintentional shift changes or saving a history of unintentional shift changes that have been performed.

Meanwhile, if the driver repeatedly performs the above-described unintentional shift changes, an excessive load is applied to the vehicle power train (engine, transmission, differential, and the like). However, since it is difficult to know the driver's intentions, it is impossible to ascertain the cause for producing the excessive load. In view of this, the inventors of the present application conceived that if it were possible to detect the above-described unintentional shift changes or save a history of the above-described unintentional shift changes, it would be possible to ascertain the cause for producing the excessive load, and thus arrived at the proposal for the present invention.

In light of such circumstances, an object of the present invention is to enable detecting an unintentional shift change in a gear-shift instruction device that notifies a driver of a target gear of a transmission in which the gear can be switched in response to a manual gear shift operation.

Another object of the present invention is to, in a gear-shift instruction device that notifies a driver of a target gear of a transmission in which the gear can be switched in response to a manual gear shift operation, enable detecting an unintentional shift change that applies an excessive load to the vehicle power train (engine, transmission, differential, and the like) and enable saving a history of the unintentional shift changes.

### [Solution to Problem]

According to the present invention, the above mentioned problems are solved by a gear-shift instruction device according to claim 1.

According to this configuration, for example, in the case of an unintentional shift change such as a down-shift when an up-shift is required, or the case of an unintentional shift change such as an up-shift when a down-shift is required, it is possible to detect such unintentional shift changes.

Here, the content of the processing performed by the detection unit is specified. Specifically, in the case of an unintentional shift change such as a down-shift when an up-shift is required while at a predetermined vehicle speed or engine speed or higher, the vehicle will rapidly decelerate and an excessive load will be applied the vehicle power train, and in consideration of this, the detection unit can detect an unintentional shift change that will apply an excessive load to the power train, and does not detect an unintentional shift change that will apply a relatively mild load to the power train.

In particular, it is specified here that, not only vehicle speed or engine speed, but also negative vehicle acceleration (deceleration G) is added as a parameter for estimating the degree of load that will be applied to the power train due to an unintentional shift change, thus enabling raising performance in the detection of an unintentional shift change that will result in the power train being damaged.

Note that the target notification unit can furthermore notify the driver to keep the target gear at the current gear, that is to say, keep the current state. In this case, in the case of an unintentional shift change such as an up-shift or a down-shift when it is required to keep the current state, it is possible to detect such an unintentional shift change.

It is preferable that the gear-shift instruction device further includes an information saving unit that, in a case where an unintentional shift change was detected by the detection unit, is configured to save the unintentional shift change in a history in an information storage unit.

In this case, for example, referencing the history of unintentional shift changes enables finding out the condition of use of the vehicle by the driver and enables being aware of the extent of the load that was applied to the vehicle power train (engine, transmission, differential, and the like).

It is preferable that the gear-shift instruction device further includes a notification unit that, in a case where an unintentional shift change was detected by the detection unit, is configured to notify the driver of the unintentional shift change. In this case, for example, notifying the driver of an unintentional shift change enables the driver to be aware of the driver's driving state.

It is preferable that the gear-shift instruction device further includes: an information saving unit that, in a case where an unintentional shift change was detected by the detection unit, is configured to save the unintentional shift change in a history in an information storage unit; and a notification unit that, in a case where an unintentional shift change was detected by the detection unit, is configured to notify the driver of the unintentional shift change.

In this case, for example, referencing the history of unintentional shift changes enables finding out the condition of use of the vehicle by the driver and enables being aware of the extent of the load that was applied to the vehicle power train. Furthermore, for example, notifying the driver of an unintentional shift change enables the driver to be aware of the driver's driving state.

It is preferable that the target notification unit of the gear-shift instruction device is configured to notify the driver of whether a shift change is to be performed and a shift change form by calculating the target gear by referencing a gear shift map based on the current vehicle speed and one of an accelerator opening degree and a throttle opening degree, and to make a determination by comparing the calculated target gear and the current gear. Here, the content of processing performed by the target detection unit is specified, and this specification clarifies an embodiment of a configuration for implementing the present invention.

### [Effects of the Invention]

The present invention enables detecting an unintentional shift change in a gear-shift instruction device that instructs a gear shift target in a transmission in which a shift change can be performed manually.

Also, according to the present invention, in a gear-shift instruction device that notifies a driver of a target gear of a transmission in which the gear can be switched in response to a manual gear shift operation, an unintentional shift change that applies an excessive load to the vehicle power train (engine, transmission, differential, and the like) can be detected, and a history of unintentional shift changes can be saved.

### [Brief Description of Drawings]

FIG. 1 is a configuration diagram showing an embodiment of a power train of a vehicle including a gear-shift instruction device according to the present invention.
FIG. 2 is a front view of a combination meter disposed in a vehicle interior in FIG. 1.
FIG. 3 is a block diagram showing the configuration of a control system of the gear-shift instruction device in FIG. 1.
FIG. 4 is a diagram showing a gear shift map used in control performed by the gear-shift instruction device in FIG. 1.
FIG. 5 is a diagram showing the pattern of a vehicle shift gate, and shows an example of an unintentional shift change which is a down-shift to the first gear when an up-shift from the second gear to the third gear is to be performed.
FIG. 6 is a diagram corresponding to FIG. 5, and shows an example of an unintentional shift change which is an overshifting down to the second gear when a down-shift from the fifth gear to the fourth gear is to be performed.
FIG. 7 is a diagram corresponding to FIG. 5, and shows an example of an unintentional shift change which is as an overshifting down to the second gear when a down-shift from the sixth gear to the fourth gear is to be performed.
FIG. 8 is a flowchart used for illustrating control performed mainly by the gear-shift instruction device in FIG. 1.

### [Description of Embodiments]

A detailed description of a preferred embodiment for carrying out the present invention will be given below with reference to the accompanying drawings.

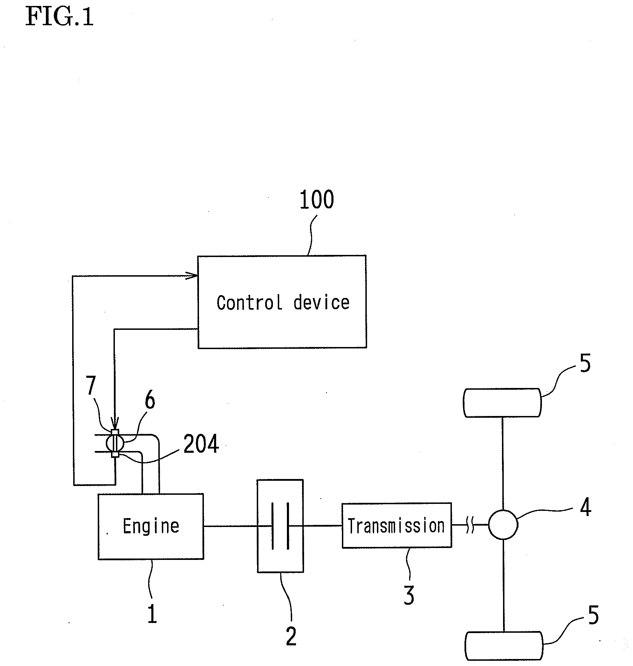

FIGS. 1 to 8 show an embodiment of the present invention. First, an overview of the configuration of a power train of a vehicle to which a gear-shift instruction device of the present invention is applied will be described with reference to FIG. 1. The vehicle power train given as an example in this embodiment is of the front-engine rear-wheel drive (FR) type.

Drive force generated by an engine 1 is input to a transmission 3 via a clutch 2 and then transmitted from the transmission 3 to left and right rear wheels 5 serving as drive wheels via a differential 4. The vehicle drive force generated by the engine 1 is controlled by a control device (ECU: electronic control unit) 100 that will be described later.

The amount of air drawn into the engine 1 is adjusted by an electronically-controlled throttle valve 6. The electronically-controlled throttle valve 6 is actuated by a throttle motor 7, and the throttle motor 7 is controlled by the control device 100.

As a throttle control operation performed by the control device 100, the control device 100 controls the throttle motor 7 so as to achieve a throttle opening degree (target throttle opening degree) for obtaining an optimum intake air amount (target air intake amount) according to operating conditions of the engine 1, such as an engine speed Ne detected by an engine speed sensor 205 and an accelerator opening degree (amount of depression of an accelerator pedal (not shown) by the driver) detected by an accelerator opening degree sensor 203. In this way, the electronically-controlled throttle valve 6 may be not only controlled so as to achieve a throttle opening degree corresponding to the accelerator opening degree, but may be also controlled so as to achieve a throttle opening degree that is independent from the accelerator opening degree. The throttle opening degree is controlled based on output from a throttle opening degree sensor 204.

A clutch 2 is, for example, a publicly known dry-type single plate friction clutch, and although not shown, a release fork is actuated by a piston rod of a clutch actuator in response to a driver operation for depressing a clutch pedal (not shown), thus displacing a release bearing in the axial direction along an input shaft of the transmission 3 so as to put the clutch 2 in a forcefully sandwiched state (engaged state), a released state (disengaged state), or a sliding state (semi-engaged state). The disengaged or engaged state of the clutch 2 in response to a clutch pedal depression operation is recognized by the control device 100 based on an output signal from a clutch stroke sensor 201. The clutch stroke sensor 201 detects an electrical signal corresponding to the stroke amount of the piston rod of the clutch actuator and inputs the electrical signal to the control device 100.

Although the internal configuration of the transmission 3 is not shown in detail, the transmission 3 has, for example, a configuration similar to that of a publicly known constant-mesh transmission having six forward gears and one reverse gear as selectable gears. A shift device 8 for manually performing gear shift operations on the transmission 3 is disposed in the vehicle interior.

Since the configuration of the shift device 8 is similar to publicly known configurations, the description thereof given here will be brief. Specifically, the shift device 8 includes a shift lever 81, a shift gate 82, a power transmission mechanism (not shown), and the like.

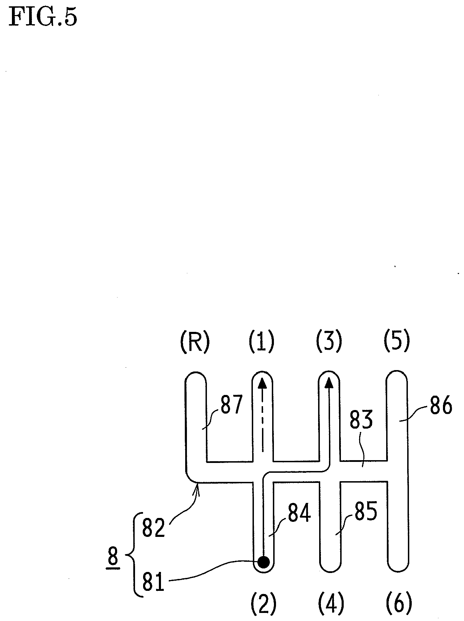

The shift lever 81 is displaced in conformity with the shift gate 82. As shown in FIGS. 5 to 7, the shift gate 82 is of the so-called H pattern type and includes one selection groove 83, multiple (three here) forward shift grooves 84, 85, and 86, and one reverse shift groove 87.

The one selection groove 83 is provided so as to extend linearly along the left-right direction (also called the vehicle width direction or the selection operation direction). The three forward shift grooves 84, 85, and 86 are provided so as to extend in the front-back direction (also called the vehicle front-back direction or shift operation direction) so as to orthogonally traverse the selection groove 83 at three places with predetermined gaps therebetween in the lengthwise direction of the selection groove 83. The one reverse shift groove 87 is provided so as to extend toward one side in the orthogonal direction (toward the front of the vehicle) from one end in the lengthwise direction of the selection groove 83.

The power transmission mechanism transmits motion of the shift lever 81 to a synchronization mechanism (not shown) for switching gears with which the transmission 3 is equipped, and since the power transmission mechanism has a configuration similar to publicly known configurations, the description thereof given here will be brief. This power transmission mechanism can be, for example, a mechanism including cables or rods and links, and the like, or alternatively can be a shift actuator. As one example, this shift actuator is configured so as to include a detection element (switch, sensor, or the like) for detecting motion of the shift lever 81, and a motor or hydraulic cylinder whose operations are controlled by a control element (e.g., the control device 100 is appropriated) based on the input of an output signal from the detection element and that is for actuating the synchronization mechanism of the transmission 3.

In one case of shift changing by the driver, a selection operation is performed to displace the shift lever 81 in one direction in the selection groove 83 of the shift gate 82, and thereafter a shift operation is performed to displace the shift lever 81 in one direction in any of the shift grooves 84 to 87. The force of the selection operation and the force of the shift operation are transmitted via the power transmission mechanism to the synchronization mechanism of the transmission 3 so as to select an appropriate gear of the transmission 3.

In this embodiment, a gear-shift instruction device is provided for notifying the driver of a target gear (gear position in the transmission 3) that is appropriate for the driving mode (e.g., a fuel consumption driving mode for fuel consumption improvement or the like, or a sports driving mode for sporty driving) in accordance with the vehicle driving condition.

The gear-shift instruction device is configured so as to include an up-shift lamp 31 and a down-shift lamp 32 for allowing the driver to visually confirm the notifications, and the control device 100 for controlling the operation of the lamps 31 and 32, and the gear-shift instruction device will be described in detail below.

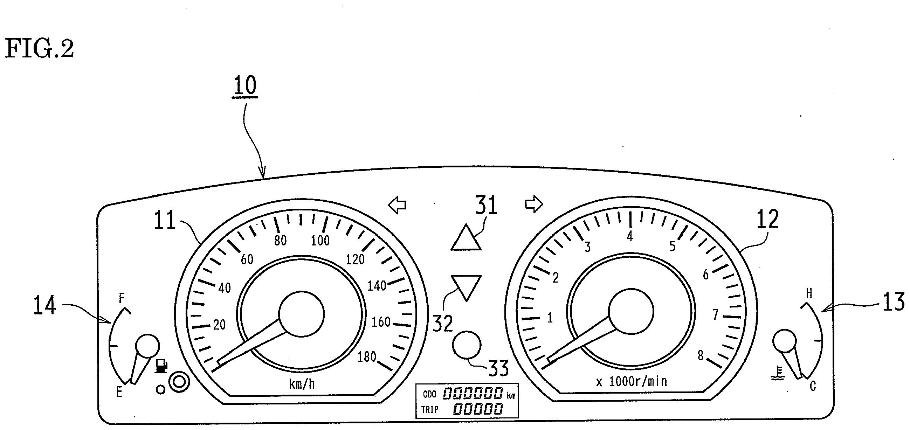

The up-shift lamp 31 and the down-shift lamp 32 are provided in the center of a combination meter 10, for example. Note that as shown in FIG. 2, the combination meter 10 is disposed in front of the driver seat in the vehicle interior, includes a speedometer 11, a tachometer 12, a water temperature gauge 13, a fuel gauge 14, and the like, and although not given reference signs, the combination meter 10 further includes turn signal lamps, an odometer, a trip meter, various types of warning indicator lamps, and the like.

The up-shift lamp 31 is lit or blinked when a request for up-shifting of the target gear of the transmission 3 is given, and the down-shift lamp 32 is lit or blinked when a request for down-shifting of the target gear of the transmission 3 is given. The up-shift lamp 31 and the down-shift lamp 32 are LEDs, for example, and the actuation (lighting or blinking) and stopping (extinguishing) thereof is controlled by the control device 100.

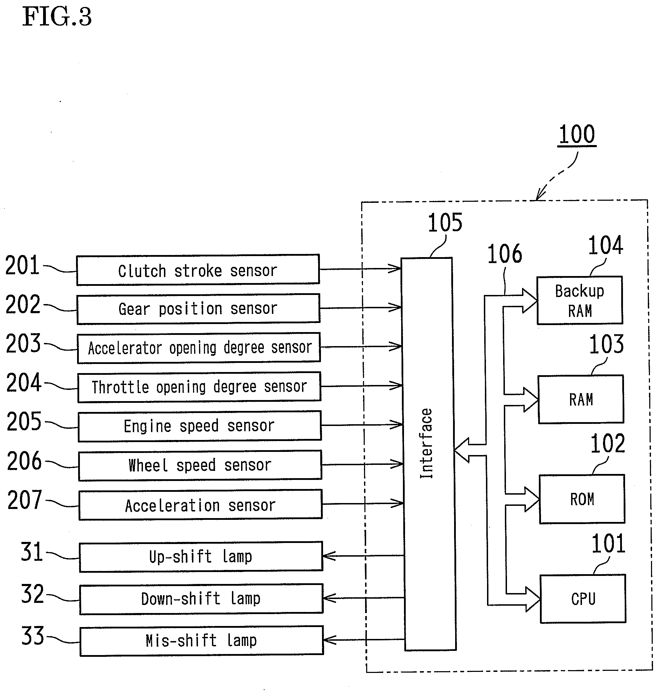

As shown in FIG. 3, the control device 100 is a generally known electronic control unit (ECU), and includes a CPU 101, a ROM 102, a RAM 103, a backup RAM 104, and the like.

The ROM 102 stores programs for executing control of the engine 1 related to basic driving of the vehicle, and also stores various types of program including a program for executing gear shift instruction control for notifying the driver of a target gear of the transmission 3 that is appropriate for the driving mode in accordance with the driving condition of the vehicle, and the like. The specific content of the gear shift instruction control will be described later.

The CPU 101 executes arithmetic processing based on a map and the programs stored in the ROM 102. Also, the RAM 103 is a memory for temporarily storing the results of arithmetic processing performed by the CPU 101, data received as input from various sensors, and the like, and the backup RAM 104 is a nonvolatile memory for storing, for example, data that is to be saved while the engine 1 is stopped.

The CPU 101, the ROM 102, the RAM 103, and the backup RAM 104 are connected to each other and an interface 105 via a bus 106.

Various types of sensors such as the following are connected to the interface 105, and also at least the up-shift lamp 31, the down-shift lamp 32, a lamp 33 for giving a notification of an unintentional shift change, and the like are connected to the interface 105.

Examples of the sensors include at least the clutch stroke sensor 201, a gear position sensor 202 for detecting the gear that is selected in the transmission 3, the accelerator opening degree sensor 203, the throttle opening degree sensor 204, the engine speed sensor 205 for detecting the rotation speed of the crankshaft of the engine 1 (engine speed Ne), a wheel speed sensor 206 for detecting the vehicle speed, and an acceleration sensor 207 for detecting the forward/backward acceleration of the vehicle.

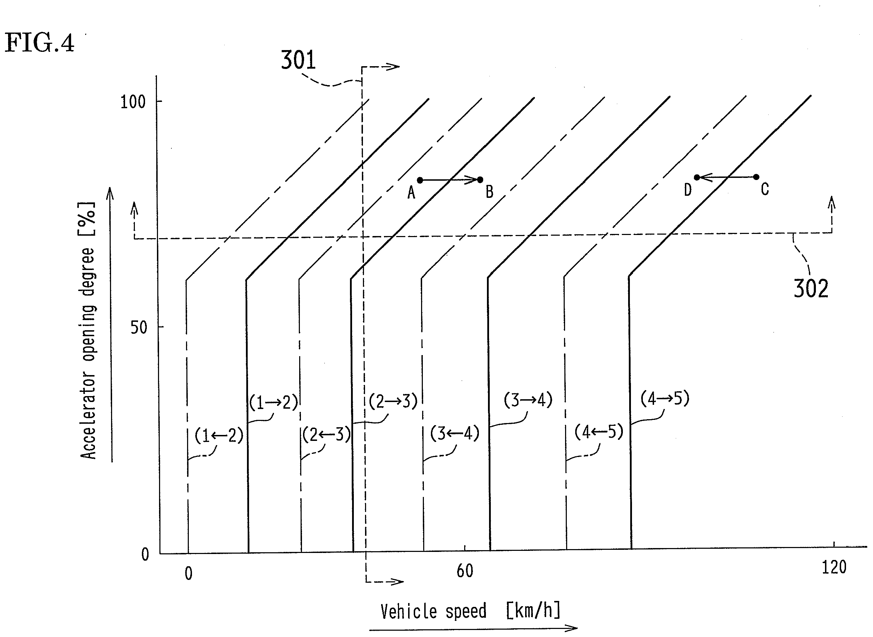

The ROM 102 furthermore stores a gear shift map such as that shown in FIG. 4. This gear shift map is a map that has the vehicle speed and the accelerator opening degree as parameters and is set with multiple regions for obtaining an optimum gear (target gear) in terms of improving fuel consumption in accordance with the vehicle speed and accelerator opening degree. The regions of the gear shift map are demarcated by gear shift lines (gear switching lines). Among the gear shift lines are up-shift lines (solid lines) and down-shift lines (dashed-dotted lines). In FIG. 4, the switching directions and gears of up-shifts and down-shifts are indicated by arrows and numbers.

In this embodiment, when shift changes are performed by the driver, unintentional shift changes that have been performed can be detected, and a history of the unintentional shift changes can be saved in a predetermined area in the RAM 103, the backup RAM 104, or the like.

Note that the unintentional shift changes are shift changes that apply an excessive load to the vehicle power train (engine 1, transmission 3, differential 4, and the like). Also, relatively mild unintentional shift changes that apply a relatively mild load being applied to the vehicle power train are not detected.

Representative examples of the unintentional shift changes will be described below with reference to FIGS. 5 to 7.

FIG. 5 shows the case where when performing an up-shift for moving the shift lever 81 from the second gear position in the 1-2 shift groove 84 of the shift gate 82 to the third gear position in the adjacent 3-4 shift groove, the shift lever 81 is accidentally moved to the first gear position (see the dashed double-dotted line). In other words, this is the case of a down-shift to the first gear when attempting to perform an up-shift to the third gear while driving in the second gear.

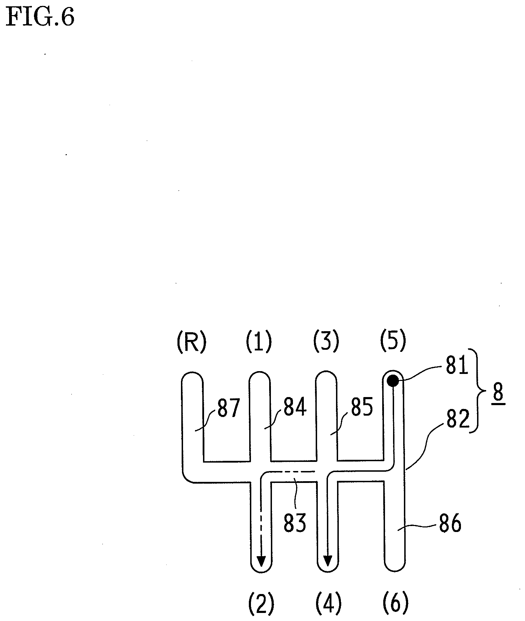

FIG. 6 shows the case where when performing a down-shift for moving the shift lever 81 from the fifth gear position in the 5-6 shift groove 86 of the shift gate 82 to the fourth gear position in the adjacent 3-4 shift groove 85, the shift lever 81 is accidentally moved to the second gear position in the 1-2 shift groove 84. In other words, this is the case of an overshifting down to the second gear when attempting to perform a down-shift to the fourth gear while driving in the fifth gear.

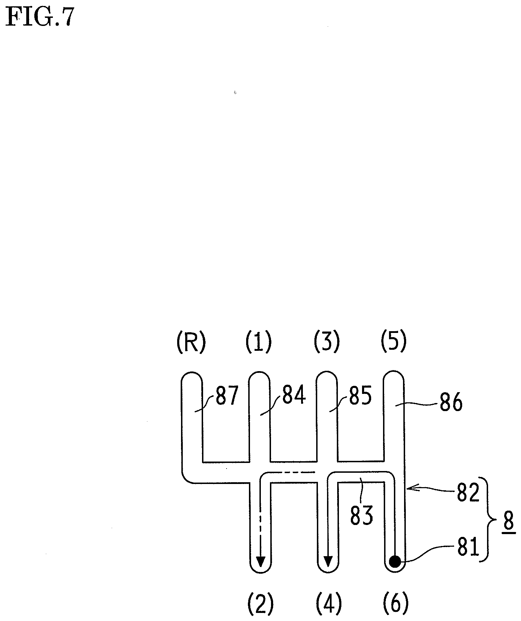

FIG. 7 shows the case where when performing a down-shift for moving the shift lever 81 from the sixth gear position in the 5-6 shift groove 86 of the shift gate 82 to the fourth gear position in the adjacent 3-4 shift groove 85, the shift lever 81 is accidentally moved to the second gear position in the 1-2 shift groove 84. In other words, this is the case of an overshifting down to the second gear when attempting to perform a down-shift to the fourth gear while driving in the sixth gear.

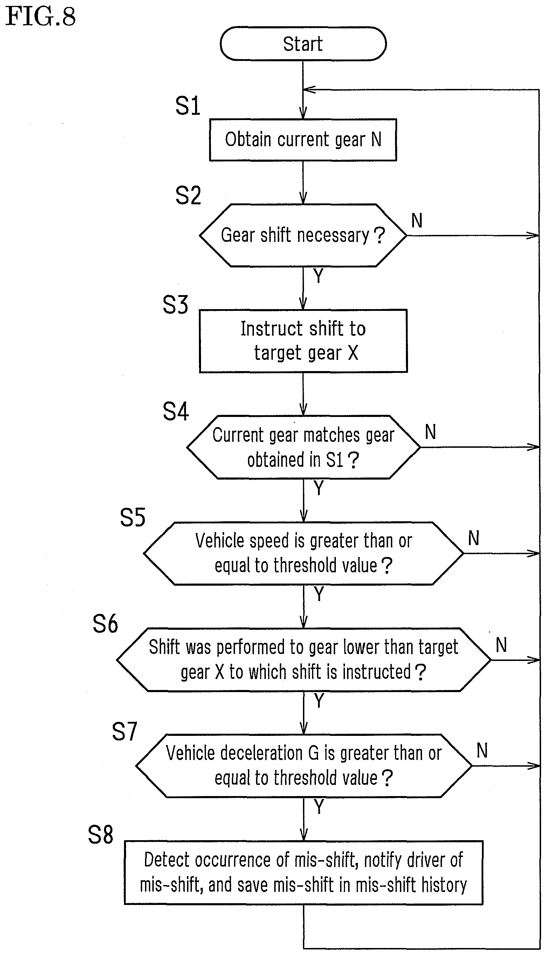

Specifically, "gear shift instruction control" performed by the control device 100 will be described in detail below with reference to the flowchart of FIG. 8. The execution of the processing of this flowchart is started along with the start of the engine 1, for example.

First, in step S1, the current (actual) gear N of the transmission 3 is obtained based on the input of an output signal from the gear position sensor 202. Note that as a method of obtaining the current gear N, it is possible to employ a method of determining the current gear N using the vehicle speed (output signal from the wheel speed sensor 206), the engine speed (output signal from the engine speed sensor 205), and the clutch state (output signal from the clutch stroke sensor 201).

Then, in the subsequent steps S2 and S3, processing is performed in order to determine whether a gear shift is necessary and notify the driver of a target gear X.

Specifically, in step S2, it is determined whether a gear shift is necessary. Here, it can be determined whether a gear shift is necessary by calculating the target gear X that is appropriate for the driving mode by referencing the gear shift map of FIG. 4 based on the input of output signals from the wheel speed sensor 206 and the accelerator opening degree sensor 203, and comparing the target gear X and the current gear N.

Here, if a gear shift is not necessary, a negative determination is made in step S2, and the procedure returns to step S1. However, if a gear shift is necessary, an affirmative determination is made in step S2, and processing for notifying the driver of a request to shift to the target gear is executed in the subsequent step S3.

For the sake of reference, in this notification processing, in the case where the current gear N is "2" for example in FIG. 4, if the vehicle speed rises from point A to point B, an up-shift gear shift line (2->3) is crossed, and therefore the target gear X becomes (N+1), that is to say, "3". In such a case, an affirmative determination is made in step S2, and the up-shift lamp 31 is actuated (lit or blinked) in step S3.

Also, in the case where the current gear N is "5" for example in FIG. 4, if the vehicle speed falls from point C to point D, an up-shift gear shift line (4<-5) is crossed, and therefore the target gear X becomes (N-1), that is to say, "4". In such a case, an affirmative determination is made in step S2, and the down-shift lamp 32 is operated (lit or blinked) in step S3.

Note that in the case where the current gear N is "2" or "5" as described above for example, if the vehicle speed remains at point A or point C without changing, the target gear X is the same as the current gear N, that is to say, "2" or "5". In this way, in the case where the target gear X and the current gear N are the same, a gear appropriate for the driving condition has been selected, and therefore a negative determination is made in step S2, and the procedure returns to step S1. For this reason, neither the up-shift lamp 31 nor the down-shift lamp 32 is actuated. In this way, in the case where neither of the lamps 31 and 32 is actuated, it can be said that a gear shift instruction for maintaining the current state is being given. Specifically, the condition in which both the lamps 31 and 32 are extinguished can be said to be information for informing the driver that the current gear N is a gear appropriate for the driving condition, and therefore is included as a "gear shift instruction" of the present invention.

Next, after executing the processing for notifying the driver of the target gear X in steps S2 and S3, whether an unintentional shift change such as any of those described above was performed when the driver performed a shift change in accordance with the notification is monitored in steps S4 to S8, and in the case where it was detected that an unintentional shift change was performed, processing for notifying the driver of the unintentional shift change is performed, and processing for saving the unintentional shift change in a history is performed.

Specifically, in step S4, it is determined whether the current gear N of the transmission 3 matches the result obtained in step S1 based on a detection signal from the gear position sensor 202. Specifically, it is determined here whether the driver performed a shift change in a time lag period that is from when the gear shift instruction was given in step S3 to when the corresponding up-shift lamp 31 or down-shift lamp 32 was actually actuated.

Here, in the case where they do not match, that is to say, the current gear N is (N+1) or (N-1), a negative determination is made in step S4, and the procedure returns to step S1. However, in the case where they match, an affirmative determination is made in step S4, and the procedure moves to the subsequent step S5.

In step S5, it is determined whether the vehicle speed is greater than or equal to a predetermined threshold value (e.g., see a broken line 301 in FIG. 4) based on the input of an output signal from the wheel speed sensor 206. For example, the degree of load that is applied to the vehicle power train when an unintentional shift change such as a down-shift when an up-shift is required is obtained by appropriate experimentation, simulation, or the like for each of various cases of unintentional shift changes, and the threshold value is set based on the obtained results.

Note that in FIG. 4, it can be presumed that the vehicle will rapidly decelerate in the case where the vehicle speed becomes greater than or equal to the predetermined threshold value (e.g., see the broken line 301 in FIG. 4) when the accelerator opening degree is greater than or equal to a predetermined threshold value (e.g., see a broken line 302 in FIG. 4), that is to say, if a change occurs such that, among the four top, bottom, left, and right regions demarcated by the intersection of the broken lines 301 and 302 indicating the two threshold values, any of gear shift lines included in the top right region is crossed.

Here, in the case where the vehicle speed is less than the threshold value (e.g., see the broken line 301 in FIG. 4), a negative determination is made in step S5, and the procedure returns to step S1. However, in the case where the vehicle speed is greater than or equal to the threshold value (e.g., see the broken line 301 in FIG. 4), an affirmative determination is made in step S5, and the procedure moves to the subsequent step S6.

In step S6, it is determined whether a shift change (i.e., a down-shift) was performed such that the current gear N becomes a gear (X-1) or (X-2) that is lower than the target gear X of which the driver was notified in step S3.

Here, if this down-shift was not performed, a negative determination is made in step S6, and the procedure returns to step S1. However, in the case where the down-shift was performed, an affirmative determination is made in step S6, and the procedure moves to the subsequent step S7.

In step S7, it is determined whether the actual deceleration G (negative acceleration) of the vehicle is greater than or equal to a predetermined threshold value based on the input of an output signal from the acceleration sensor 207. The relationship between the vehicle deceleration G and the degree of load applied to the vehicle power train at that deceleration G is obtained through appropriate experimentation, simulation, or the like, and the threshold value is set based on the obtained results.

Here, if the actual deceleration G is less than the threshold value, a negative determination is made in step S7, and the procedure returns to step S1. However, in the case where the actual deceleration G is greater than or equal to the threshold value, an affirmative determination is made in step S7, and the procedure moves to the subsequent step S8.

In step S8, it is detected that an unintentional shift change was performed, notification processing is performed for actuating (lighting or blinking) the lamp 33 in order to notify the driver that the unintentional shift change occurred, and saving processing is performed for saving the unintentional shift change in a history in a predetermined area in the RAM 103, the backup RAM 104, or the like.

Note that as the saving processing, it is possible to retain a region for saving an unintentional shift change history in the RAM 103, the backup RAM 104, or the like in advance, and count up (increment) a counter each time an unintentional shift change is detected.

Thereafter, whether or not an unintentional shift change occurred is monitored by repeating steps S1 to S8 until the engine 1 stops.

As described above, according to the embodiment to which the present invention is applied, in the exemplary case of an unintentional shift change that will subject the vehicle power train to excessive damage (e.g., a down-shift when an up-shift is required while at a predetermined vehicle speed or predetermined engine speed or higher, such that the vehicle rapidly decelerates), the unintentional shift change can be reliably detected, the driver can be notified of the unintentional shift change by actuating (lighting or blinking) the lamp 33, and the unintentional shift change can be saved in an unintentional shift change history in an appropriate memory.

In this case, for example, notifying the driver of an unintentional shift change enables the driver to be aware of the driver's driving state, and furthermore, by referencing the history of unintentional shift changes, a maintenance company or the like can find out the condition of vehicle use by the driver and become aware of the extent of the load that was applied to the vehicle power train. As a result, in the case where the vehicle power train has been subjected to an excessive load due to repeated unintentional shift changes, referencing the unintentional shift change history enables ascertaining the cause for producing the excessive load.

In particular, in this embodiment, not only vehicle speed (or engine speed), but also negative vehicle acceleration (deceleration G) is added as a parameter for estimating the degree of load that will be applied to the power train due to an unintentional shift change, thus enabling improving reliability by, for example, raising performance in the detection of an unintentional shift change.

In the embodiment described above, the control device 100 corresponds to an element for realizing the functions of elements recited in the claims. Specifically, steps S1 to S3 correspond to the target notification unit recited in the claims, and steps S4 to S8 correspond to the detection unit recited in the claims. Also, step S8 and the RAM 103 or the backup RAM 104 of the control device 100 correspond to the information saving unit recited in the claims, step S8 corresponds to the notification unit and the processing unit recited in the claims, step S5 corresponds to the driving condition determination unit recited in the claims, step S6 corresponds to the gear shift operation determination unit recited in the claims, and step S7 corresponds to the rapid deceleration determination unit recited in the claims.

Note that the present invention is not limited to only the above embodiment, and appropriate modifications can be made within the scope of the claims.
(1) Although the example of applying the present invention to a vehicle having an FR type of power train is described in the above embodiment, the present invention is not limited to this. Although not shown, the present invention can also be applied to a vehicle having a front-engine, front-wheel drive (FF) type of power train, for example.
(2) Although the example of an MT (manual transmission) vehicle in which gears in the transmission 3 are changed by operations performed on the clutch pedal (not shown) and the shift lever 81 is described in the above embodiment, the present invention is not limited to this. Although not shown, the present invention can also be applied to an AMT (automated manual transmission) vehicle, for example. An AMT vehicle has a publicly known configuration in which, for example, the clutch pedal is omitted and the clutch 2 is actuated by an actuator, and an up-shift or a down-shift is performed on the transmission 3 in response to an operation for pushing the shift lever forward or an operation for pushing it backward.
(3) There are no limitations to the number of gears in the transmission 3 and the gate pattern of the shift gate 82 described in the above embodiment, and although not shown, the present invention can be applied to various variations thereof.
(4) Although the example where the up-shift lamp 31 and the down-shift lamp 32 for notifying the driver of a gear shift instruction and the lamp 33 for notifying the driver of an unintentional shift change are disposed on the combination meter 10 in the above embodiment, there are no particular limitations on the disposition positions of the lamps 31 to 33. Also, in place of the lamps 31 to 33, a case is possible in which the driver is notified by displaying characters, symbols, several degrees, or the like on an appropriate display.

### [Industrial Applicability]

The present invention can be favorably applied to a gear-shift instruction device that notifies a driver of a target gear of a transmission in which the gear can be switched in response to a manual gear shift operation.

### [Reference Signs List]

- 1: engine
- 2: clutch
- 3: transmission
- 8: shift device
- 81: shift lever
- 82: shift gate
- 10: combination meter
- 31: up-shift lamp
- 32: down-shift lamp
- 33: lamp
- 100: control device
- 202: gear position sensor
- 203: accelerator opening degree sensor
- 205: engine speed sensor
- 206: wheel speed sensor
- 207: acceleration sensor

## Claims

1. A gear-shift instruction device that notifies a driver of a target gear in a transmission (3) in which a gear can be switched in response to a manual gear shift operation, the gear-shift instruction device comprising:
a target notification unit (S1 to S3) that is configured to notify the driver of the target gear so as to cause at least an up-shift or a down-shift to be performed relative to the current gear based on a driving condition of a vehicle in which the transmission is mounted;
**characterized by**
a detection unit (S4 to S8) that, in a case where a notification was made by the target notification unit, if a shift change is made to a gear different from the notified target gear, is configured to detect the shift change as an unintentional shift change,
wherein the detection unit comprises:
a driving condition determination unit (S5) that is configured to determine whether the vehicle speed or an engine speed is greater than or equal to a predetermined value;
a gear shift operation determination unit (S6) that is configured to determine whether the current gear is lower than the target gear notified by the target notification unit;
a rapid deceleration determination unit (S7) that is configured to determine whether a negative acceleration of the vehicle is greater than or equal to a predetermined value; and
a processing unit (S8) that is configured to determine that a shift change is an unintentional shift change in a case where an affirmative determination was made by the driving condition determination unit, the gear shift operation determination unit determined that the current gear is lower than the target gear, and an affirmative determination was made by the rapid deceleration determination unit.

2. The gear-shift instruction device according to claim 1, further comprising an information saving unit (S8, 103; S8, 104) that, in a case where an unintentional shift change was detected by the detection unit, is configured to save the unintentional shift change in a history in an information storage unit (103; 104).

3. The gear-shift instruction device according to claim 1, further comprising a notification unit (S8) that, in a case where an unintentional shift change was detected by the detection unit, is configured to notify the driver of the unintentional shift change.

4. The gear-shift instruction device according to claim 1, further comprising:
an information saving unit (S8, 103; S8, 104) that, in a case where an unintentional shift change was detected by the detection unit, is configured to save the unintentional shift change in a history in an information storage unit (103; 104); and
a notification unit (S8) that, in a case where an unintentional shift change was detected by the detection unit, is configured to notify the driver of the unintentional shift change.

5. The gear-shift instruction device according to any one of claims 1 to 4, wherein the target notification unit is configured to notify the driver of whether a shift change is to be performed and a shift change form by calculating the target gear by referencing a gear shift map based on the current vehicle speed and one of an accelerator opening degree and a throttle opening degree, and to make a determination by comparing the calculated target gear and the current gear.

## Patentansprüche

1. Gangschaltanweisungsvorrichtung, die einen Fahrer über einen Sollgang in einem Getriebe (3) benachrichtigt, in dem ein Gang in Erwiderung auf einen manuellen Gangschaltbetrieb umgeschaltet werden kann, wobei die Gangschaltanweisungsvorrichtung Folgendes aufweist:
eine Sollbenachrichtigungseinheit (S1 bis S3), die gestaltet ist, um auf der Basis eines Fahrzustands eines Fahrzeugs, in dem das Getriebe montiert ist, den Fahrer über den Sollgang zu benachrichtigen, um zu bewirken, dass wenigstens ein Hochschalten oder ein Herunterschalten bezüglich des gegenwärtigen Gangs durchgeführt wird,;
**gekennzeichnet, durch**
eine Erfassungseinheit (S4 bis S8), die, in einem Fall, in dem eine Benachrichtigung durch die Sollbenachrichtigungseinheit ausgegeben worden ist, falls eine Schaltänderung zu einem Gang gemacht wird, der sich von dem benachrichtigten Sollgang unterscheidet, gestaltet ist, um die Schaltänderung als eine unbeabsichtigte Schaltänderung zu erfassen,
wobei die Erfassungseinheit Folgendes aufweist:
eine Fahrzustandsbestimmungseinheit (S5), die gestaltet ist, um zu bestimmen, ob die Fahrzeuggeschwindigkeit oder eine Maschinendrehzahl größer als oder gleich wie ein vorbestimmter Wert ist;
eine Gangschaltbetriebsbestimmungseinheit (S6), die gestaltet ist, um zu bestimmen, ob der gegenwärtige Gang niedriger als der Sollgang ist, der durch die Sollbenachrichtigungseinheit benachrichtigt ist;
eine Einheit (S7) zum Bestimmen einer schnellen Verzögerung, die gestaltet ist, um zu bestimmen, ob eine negative Beschleunigung des Fahrzeugs größer als oder gleich wie ein vorbestimmter Wert ist; und
eine Verarbeitungseinheit (S8), die gestaltet ist, um zu bestimmen, dass eine Schaltänderung eine unbeabsichtigte Schaltänderung ist, in einem Fall, in dem eine positive Bestimmung durch die Fahrzustandsbestimmungseinheit gemacht worden ist, die Gangschaltbetriebsbestimmungseinheit bestimmt hat, dass der gegenwärtige Gang niedriger als der Sollgang ist, und eine positive Bestimmung durch die Einheit zur Bestimmung einer schnellen Verzögerung gemacht worden ist.

2. Gangschaltanweisungsvorrichtung nach Anspruch 1, des Weiteren mit einer Informationssicherungseinheit (S8, 103; S8, 104), die, in einem Fall, in dem eine unbeabsichtigte Schaltänderung durch die Erfassungseinheit erfasst worden ist, gestaltet ist, um die unbeabsichtigte Schaltänderung in einer Historie in einer Informationsspeichereinheit (103; 104) zu sichern.

3. Gangschaltanweisungsvorrichtung nach Anspruch 1, des Weiteren mit einer Benachrichtigungseinheit (S8), die, in einem Fall, in dem eine unbeabsichtigte Schaltänderung durch die Erfassungseinheit erfasst worden ist, gestaltet ist, um den Fahrer über die unbeabsichtigte Schaltänderung zu benachrichtigen.

4. Gangschaltanweisungsvorrichtung nach Anspruch 1, des Weiteren mit:
einer Informationssicherungseinheit (S8, 103; S8, 104), die, in einem Fall, in dem eine unbeabsichtigte Schaltänderung durch die Erfassungseinheit erfasst worden ist, gestaltet ist, um die unbeabsichtigte Schaltänderung in einer Historie in einer Informationsspeichereinheit (103; 104) zu sichern; und
einer Benachrichtigungseinheit (S8), die, in einem Fall, in dem eine unbeabsichtigte Schaltänderung durch die Erfassungseinheit erfasst worden ist, gestaltet ist, um den Fahrer über die unbeabsichtigte Schaltänderung zu benachrichtigen.

5. Gangschaltanweisungsvorrichtung nach einem der Ansprüche 1 bis 4, wobei die Sollbenachrichtigungseinheit gestaltet ist, um den Fahrer darüber zu benachrichtigen, ob eine Schaltänderung durchzuführen ist, und über eine Schaltänderungsform zu benachrichtigen durch Berechnen des Sollgangs durch Bezugnehmen auf ein Gangschaltkennfeld basierend auf der gegenwärtigen Fahrzeuggeschwindigkeit und einem von einem Beschleunigeröffnungsgrad und einem Drosselöffnungsgrad, und um eine Bestimmung durch Vergleichen des berechneten Sollgangs und des gegenwärtigen Gangs zu machen.

## Revendications

1. Dispositif d'instruction de changement de rapport qui notifie à un conducteur un rapport cible dans une transmission (3) dans laquelle un rapport peut être commuté en réponse à une opération de changement de rapport manuelle, dans lequel le dispositif d'instruction de changement de rapport comprend :
une unité de notification de cible (S1 à S3) qui est configurée pour notifier au conducteur le rapport cible de manière à provoquer l'exécution d'au moins un passage à un rapport supérieur ou un passage à un rapport inférieur par rapport au rapport actuel sur la base d'une condition de conduite d'un véhicule dans lequel la transmission est montée;
**caractérisé par**
une unité de détection (S4 à S8) qui, dans un cas dans lequel une notification a été effectuée par l'unité de notification de cible, si un changement de rapport est effectué vers un rapport différent du rapport cible notifié, est configurée pour détecter le changement de rapport en tant que changement de rapport involontaire,
dans lequel l'unité de détection comprend :
une unité de détermination de condition de conduite (S5) qui est configurée pour déterminer si la vitesse de véhicule ou une vitesse de moteur à combustion interne est supérieure ou égale à une valeur prédéterminée ;
une unité de détermination d'opération de changement de rapport (S6) qui est configurée pour déterminer si le rapport actuel est inférieur au rapport cible notifié par l'unité de notification de cible ;
une unité de détermination de décélération rapide (S7) qui est configurée pour déterminer si une accélération négative du véhicule est supérieure ou égale à une valeur prédéterminée ; et
une unité de traitement (S8) qui est configurée pour déterminer qu'un changement de rapport est un changement de rapport involontaire dans un cas dans lequel une détermination affirmative a été effectuée par l'unité de détermination de condition de conduite, que l'unité de détermination d'opération de changement de rapport a déterminé que le rapport actuel est inférieur au rapport cible, et que la détermination affirmative a été effectuée par l'unité de détermination de décélération rapide.

2. Dispositif d'instruction de changement de rapport selon la revendication 1, qui comprend en outre une unité de sauvegarde d'informations (S8, 103 ; S8, 104) qui, dans un cas dans lequel un changement de rapport involontaire a été détecté par l'unité de détection, est configurée pour sauvegarder le changement de rapport involontaire dans un historique dans une unité de mémorisation d'informations (103 ; 104).

3. Dispositif d'instruction de changement de rapport selon la revendication 1, qui comprend en outre une unité de notification (S8) qui, dans un cas dans lequel un changement de rapport involontaire a été détecté par l'unité de détection, est configurée pour notifier au conducteur le changement de rapport involontaire.

4. Dispositif d'instruction de changement de rapport selon la revendication 1, qui comprend en outre :
une unité de sauvegarde d'informations (S8, 103 ; S8, 104) qui, dans un cas dans lequel un changement de rapport involontaire a été détecté par l'unité de détection, est configurée pour sauvegarder le changement de rapport involontaire dans un historique dans une unité de mémorisation d'informations (103 ; 104) ; et
une unité de notification (S8) qui, dans un cas dans lequel un changement de rapport involontaire a été détecté par l'unité de détection, est configurée pour notifier au conducteur le changement de rapport involontaire.

5. Dispositif d'instruction de changement de rapport selon l'une quelconque des revendications 1 à 4, dans lequel l'unité de notification de cible est configurée pour notifier au conducteur si un changement de rapport doit être effectué et une forme de changement de rapport en calculant le rapport cible avec référence à une carte de changement de rapport sur la base de la vitesse de véhicule actuelle et de l'un d'un degré d'ouverture d'accélérateur et d'un degré d'ouverture de papillon, et pour effectuer une détermination en comparant le rapport cible calculé et le rapport actuel.
